# FASCICULE DE BREVET EUROPEEN

(11) **EP 3 947 122 B1**
(45) Date de publication et mention de la délivrance du brevet: **11.06.2025**
(21) Numéro de dépôt: 20709276.8
(22) Date de dépôt: 05.02.2020
(51) Int. Cl.: B62D 65/02

(54) **ENSEMBLE DE MONTAGE DE VEHICULE**
FAHRZEUGMONTAGEEINHEIT
VEHICLE ASSEMBLY UNIT

(30) Priorité: 26.03.2019 FR 1903115
(43) Date de publication de la demande: 09.02.2022
(73) Titulaire: Stellantis Auto SAS, 78300 Poissy (FR)
(72) Inventeur: LEGRAND, Francois Noel, 25200 Montbeliard (FR)
(74) Mandataire: PSIP
(86) Numéro de dépôt international: PCT/FR2020/050191
(87) Numéro de publication internationale: WO 2020/193879

(56) Documents cités:
- EP-A1- 0 693 416
- WO-A1-87/04680
- FR-A1- 3 034 716
- US-A1- 2013 192 714

## Description

La présente invention concerne le montage des véhicules. Plus particulièrement, l'invention a pour objet un ensemble de montage de véhicule.

Actuellement, lors du montage d'un véhicule, pendant l'opération de coiffage la caisse du véhicule est descendue sur les éléments mécaniques à fixer sur cette caisse. Ces éléments mécaniques sont eux-mêmes maintenus sur une platine de préparation mécanique et comprennent entre autres le circuit de carburant avec sa tubulure de remplissage de carburant. Un tel ensemble de montage du véhicule est connu par exemple du document EP0693416A1. Pendant cette opération de coiffage, cette tubulure de remplissage est maintenue en position de sorte à permettre la descente de la caisse sur les éléments mécaniques à fixer sans accrocher cette tubulure.

Cependant, une même platine de préparation mécanique peut être utilisée pour le montage de différentes silhouettes de véhicule. Donc en fonction de la silhouette du véhicule à assembler, chaque tubulure de remplissage a son système de maintien, ce qui impose des opérations pour régler les différentes positions de tubulures.

Ces opérations, effectuées manuellement, demandent du temps et comportent un risque d'erreur de positionnement et donc d'endommagement voire de rupture de la tubulure de remplissage pendant l'opération de coiffage.

L'invention vise à résoudre ces problèmes en proposant un ensemble de montage de véhicule comprenant :
- une platine de préparation d'organes mécaniques, cette platine de préparation d'organes mécaniques étant prévue pour l'assemblage de différents types de véhicule,
- un circuit de carburant spécifique au type de véhicule à assembler et équipé d'une tubulure de remplissage du carburant,
- le circuit de carburant étant disposé sur la platine de préparation d'organes mécaniques,
caractérisé en ce que la platine de préparation d'organes mécaniques comprend un premier moyen d'accrochage de la tubulure de remplissage dont la position de maintien de la tubulure par rapport à la platine est identique pour tout type de véhicule, et en ce que le circuit de carburant comprend un second moyen d'accrochage qui coopère avec le premier moyen d'accrochage pour maintenir la tubulure de remplissage et dont la position de ce second moyen d'accrochage est spécifique au circuit de carburant du type de véhicule à assembler.

L'effet technique est de permettre le montage fiable de plusieurs types de véhicules sur une même platine de préparation d'organes mécaniques, en standardisant la position de maintien des tubulures carburant du côté de la platine de préparation d'organes mécaniques.

Diverses caractéristiques supplémentaires peuvent être prévues, seules ou en combinaisons :
Selon une réalisation, le premier moyen d'accrochage comprend une partie mâle coopérant avec une partie femelle du second moyen d'accrochage, ou l'inverse.

Selon une réalisation, le second moyen d'accrochage est moulé sur la tubulure de remplissage.

Selon une réalisation, le second moyen d'accrochage est disposé sur un filtre à carburant, un récupérateur de vapeur de carburant, une patte fixée à un récupérateur de vapeur de carburant ou une pompe du circuit de carburant.

Selon une réalisation, le second moyen d'accrochage est disposé sur un support de tubulure fixé à la tubulure, ce support étant destiné à être relié à une caisse du véhicule.

Selon une réalisation, la platine de préparation d'organes mécaniques comprend une canne de soutien, le premier moyen d'accrochage étant disposé au bout de cette canne de soutien.

Selon une réalisation, la canne de soutien est télescopique.

Selon une réalisation, la canne de soutien comprend une partie fixe par rapport à la platine de préparation d'organes mécaniques et une partie mobile rétractable dans la partie fixe, le premier moyen d'accrochage étant disposé au bout de cette partie mobile.

Selon une réalisation, la canne de soutien comprend une poignée de manipulation de la partie mobile.

L'invention concerne également un procédé d'assemblage de différents types de véhicule comprenant une étape de coiffage de la caisse d'un type de véhicule sur un ensemble de montage de l'invention , ce procédé comprenant une étape préalable de déploiement par un opérateur de la canne de soutien pour la mise en place du premier moyen d'accrochage à une position identique pour tout type de véhicule suivi d'une étape d'engagement par cet opérateur du second moyen d'accrochage de la tubulure de remplissage de carburant dans le premier moyen d'accrochage.

D'autres particularités et avantages apparaîtront à la lecture de la description ci-après d'un mode particulier de réalisation, non limitatif de l'invention, faite en référence aux figures dans lesquelles :
**[****Fig 1****]** cette figure représente une opération de coiffage au cours d'un montage de véhicule selon l'invention.
**[****Fig 2****]** cette figure représente une vue partielle d'une platine de préparation d'organes mécaniques, avec la canne de soutien de la tubulure de remplissage de carburant, les organes mécaniques n'étant pas visibles, pour plus de clarté.
**[****Fig 3****]** cette figure représente un mode de réalisation d'un premier moyen d'accrochage de la tubulure de remplissage de carburant selon l'invention.
**[****Fig 4****]** cette figure représente un mode de réalisation d'un second moyen d'accrochage selon l'invention de la tubulure de remplissage de carburant, ce second moyen d'accrochage étant apte à coopérer avec le premier moyen d'accrochage illustré à la figure 3.
**[****Fig 5****]** cette figure représente l'assemblage des premier et second moyens d'accrochage illustrés aux figures 3 et 4.
**[****Fig 6****]** cette figure représente un mode de réalisation de disposition du second moyen d'accrochage.
**[****Fig 7****]** cette figure représente un autre mode de réalisation de disposition du second moyen d'accrochage.

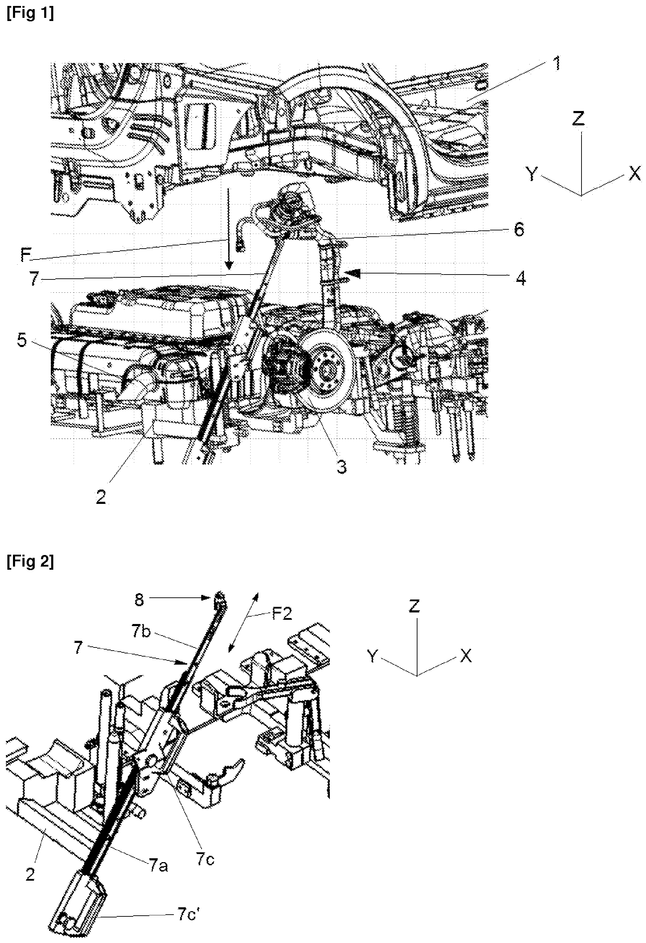

La figure 1 illustre une opération d'assemblage dite de coiffage au cours de laquelle une caisse 1 de véhicule, classiquement désignée en fabrication automobile caisse en blanc, est descendue (cf. flèche F1) sur une platine 2 de préparation d'organe mécaniques. Cette platine 2 de préparation d'organes mécaniques, encore désignée sous l'acronyme POM, supporte les organes mécaniques tel que des trains roulants 3, un circuit 4 de carburant et son réservoir, la ligne d'échappement 5, etc...

Pendant cette opération de coiffage, les organes mécaniques sont maintenus en position sur la platine 2 de préparation d'organes mécaniques pour se loger dans leur emplacement et pouvoir ensuite être vissé en automatique. Tous les organes mécaniques sont préalablement posés sur la platine 2 de préparation d'organe mécaniques. Plusieurs types de véhicules peuvent se monter sur cette même platine 2 de préparation d'organes mécaniques.

Le circuit 4 de carburant est équipé d'une tubulure 6 de remplissage de carburant. Cette tubulure 6 de remplissage de carburant est maintenue en position au bout d'une canne 7 de soutien. Le circuit 4 de carburant étant spécifique au type de véhicule à assembler, selon le type de véhicule à assembler, la position de la tubulure 6 par rapport à la platine 2 de préparation d'organes mécaniques diffère. Cette canne 7 de soutien peut avantageusement être télescopique afin d'être en position ramassée en dehors de l'opération de coiffage et en position déployée pour l'opération de coiffage. Les figures 1 et 2 présentent la canne 7 en position déployée. La canne 7 de soutien comprend une partie fixe 7a par rapport à la platine 2 de préparation des organes et une partie 7b mobile, rétractable par translation de cette partie mobile dans la partie fixe 7a (cf. flèche F2). Afin de pouvoir rétracter ou déployer manuellement la canne 7 de soutien il est prévu des poignées 7c, 7c'. Ces poignées seront utilisée par un opérateur.

Conformément à l'invention, et comme le montre plus précisément la figure 2, il est prévu que la platine 2 de préparation d'organes mécaniques comprend un premier moyen 8 d'accrochage de la tubulure 6 de remplissage. Ce premier moyen 8 d'accrochage de la tubulure 6 de remplissage. La position de ce premier moyen 8 d'accrochage par rapport à la platine 2 de préparation d'organes mécaniques, pour le maintien en position de la tubulure 6 de remplissage lors de l'opération de coiffage est toujours identique, quel que soit le type de véhicule à assembler.

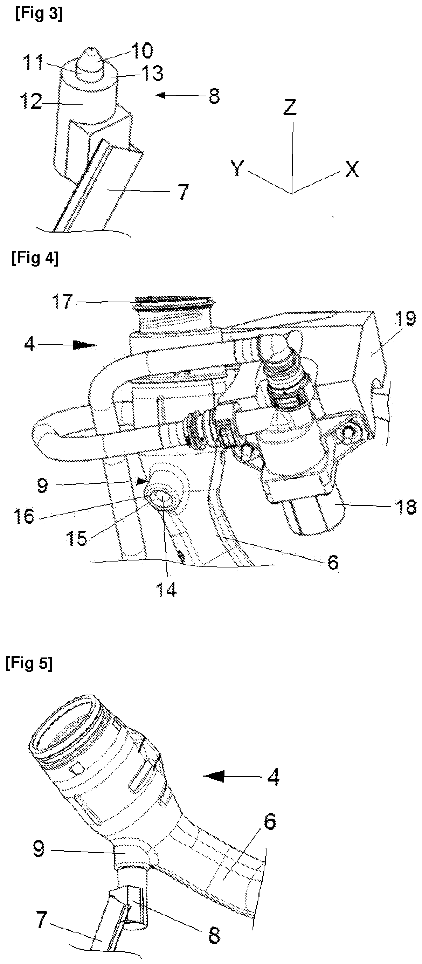

Comme l'illustre la figure 4, le circuit 4 de carburant comprend un second moyen 9 d'accrochage qui coopère avec le premier moyen 8 d'accrochage pour maintenir la tubulure 6 de remplissage de carburant. Puisque la position du premier moyen 8 d'accrochage lors de l'opération de coiffage est indépendante du type de véhicule, la position du second moyen 9 d'accrochage est adaptée à la spécificité du circuit 4 de carburant du type de véhicule à assembler.

La figure 3 illustre un mode de réalisation du premier moyen 8 d'accrochage et la figure 4 un mode de réalisation du second moyen 9 d'accrochage, ces deux moyens d'accrochage étant agencés pour coopérer de sorte à maintenir le tubulure 6 de remplissage en place lors de l'opération de coiffage, comme illustré à la figure 5.

Dans ce mode le mode de réalisation illustré à la figure 3, le premier moyen 8 d'accrochage comporte un cône 10 de guidage formant l'extrémité d'un pion 11 cylindrique. Ce pion 11 est disposé sur un support 12 plus large que le pion 11 de façon à former un épaulement 13 qui servira de butée pour le second moyen 9 d'accrochage. Le support 12 est fixé en extrémité de la canne 7 de soutien, sur la partie mobile 7b de cette canne.

Dans ce mode de réalisation illustré à la figure 4, le second moyen 9 d'accrochage comporte un trou 14 destiné à recevoir le pion 11 du premier moyen 8 d'accrochage. Ce trou comprend un cône 15 d'entrée qui servira au guidage de l'introduction du cône 10 du premier moyen 8 d'accrochage et un bord 16 destiné à venir en butée sur l'épaulement 13 du premier moyen 8 d'accrochage. Le diamètre du trou peut être par exemple de l'ordre de 10 mm.

Dans ce mode de réalisation, le second moyen 9 d'accrochage est disposé sur la tubulure 6 de remplissage, par surmoulage, près de l'embouchure 17 de remplissage.

Le premier 8 et le second moyen 9 d'accrochage forme l'ensemble de maintien de la tubulure 6 de remplissage à la platine 2 de préparation des organes mécaniques. Dans ce mode de réalisation, le premier moyen 8 d'accrochage constitue la partie mâle et le second moyen 8 d'accrochage constitue la partie femelle de cet ensemble de maintien de la tubulure 6 de remplissage. L'inverse peut toutefois être prévu.

En se référant à la figure 1, l'assemblage des premier et second moyens d'accrochage permet de bloquer la tubulure 6 de remplissage par rapport à la platine 2 de préparation d'organes mécanique en translation selon les trois axes orthogonaux X, Y et Z, pour l'opération de coiffage. De plus, une fois l'opération de coiffage terminé, lorsque la platine 2 de préparation se retire en descendant selon l'axe Z, le premier moyen 8 d'accrochage se désolidarise du second moyen 9 d'accrochage sans intervention, le pion 11 sortant du trou 14.

Le second moyen 9 d'accrochage peut ne pas être situé sur la tubulure 6. En variante, selon la spécificité du circuit de carburant à monter sur le véhicule, ce second moyen 9 d'accrochage peut être placé sur un filtre à carburant ou un récupérateur de vapeur de carburant 18 ou encore sur une pompe 19 à carburant du circuit 4 de carburant.

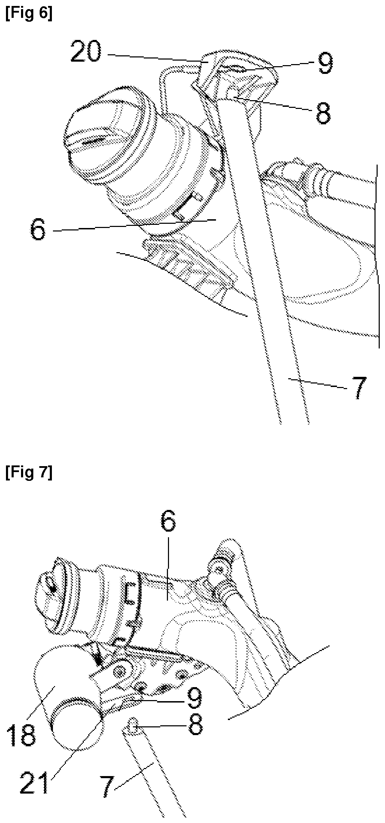

Comme le montre encore la figure 6 le second moyen 9 d'accrochage peut être disposé sur un support 20 de tubulure. Ce support 20, fixé à la tubulure sert à relier solidairement la tubulure 6 à la caisse du véhicule (non représentée).

La figure 7 présente un autre mode de réalisation dans lequel le second moyen 9 d'accrochage est disposé sur une patte 21, fixée au récupérateur de vapeur de carburant 18.

Le procédé d'assemblage, valable pour tous les types de véhicules, est le suivant :
En préparation à l'opération de coiffage un opérateur déploie la canne 7 de soutien et place le premier moyen 8 d'accrochage en position, cette position étant identique pour tout type de véhicule à assembler. Ensuite, cet opérateur met en place la tubulure 6 de remplissage en position en engageant le second moyen 9 d'accrochage dans le premier moyen 8 d'accrochage. La tubulure 6 de remplissage est alors en position pour permettre l'opération de coiffage de la caisse 1 du véhicule sur ses organes mécaniques.

Ensuite la caisse 1 du véhicule descend sur les organes mécaniques, c'est l'opération de coiffage.

Une fois la caisse 1 du véhicule en place sur ses organes mécaniques, la caisse 1 du véhicule est vissée automatiquement à ses organes mécaniques.

Ensuite la platine de préparation est retirée en descendant selon l'axe Z, ce qui permet au second moyen 9 d'accrochage de se désengager du premier moyen 8 d'accrochage.

Un opérateur intervient ensuite pour rétracter la canne 7 de soutien.

L'invention permet de standardiser le maintien des tubulures de remplissage carburant afin d'éviter des mises en opération inutile sur la platine de préparation des organes mécaniques et un risque d'erreur. Ainsi, on obtient une unification des positions et des formes pour le maintien des différentes tubulures sur une même platine préparation des organes mécaniques.

## Revendications

1. Ensemble de montage de véhicule comprenant :
- une platine (2) de préparation d'organes mécaniques (3, 4, 5), cette platine (2) de préparation d'organes mécaniques (3, 4, 5) étant prévue pour l'assemblage de différents types de véhicule,
- un circuit (4) de carburant spécifique au type de véhicule à assembler et équipé d'une tubulure (6) de remplissage du carburant,
- le circuit (4) de carburant étant disposé sur la platine (2) de préparation d'organes mécaniques,
**caractérisé en ce que** la platine (2) de préparation d'organes mécaniques comprend un premier moyen (8) d'accrochage de la tubulure (6) de remplissage dont la position de maintien de la tubulure (6) par rapport à la platine (2) est identique pour tout type de véhicule, et **en ce que** le circuit (4) de carburant comprend un second moyen (9) d'accrochage qui coopère avec le premier moyen (8) d'accrochage pour maintenir la tubulure (6) de remplissage et dont la position de ce second moyen (9) d'accrochage est spécifique au circuit (4) de carburant du type de véhicule à assembler.

2. Ensemble selon la revendication 1, **caractérisé en ce que** le premier moyen (8) d'accrochage comprend une partie mâle coopérant avec une partie femelle du second moyen (9) d'accrochage, ou l'inverse.

3. Ensemble selon la revendication 2, **caractérisé en ce que** le second moyen (9) d'accrochage est moulé sur la tubulure (6) de remplissage.

4. Ensemble selon la revendication 1 ou la revendication 2, **caractérisé en ce que** le second moyen (9) d'accrochage est disposé sur un filtre à carburant, un récupérateur (18) de vapeur de carburant, une patte (21) fixée à un récupérateur (18) de vapeur de carburant ou une pompe (19) du circuit (4) de carburant.

5. Ensemble selon la revendication 1 ou la revendication 2, **caractérisé en ce que** le second moyen (9) d'accrochage est disposé sur un support (20) de tubulure fixé à la tubulure (6), ce support étant destiné à être relié à une caisse du véhicule.

6. Ensemble selon l'une des revendications précédentes, **caractérisé en ce que** la platine (2) de préparation d'organes mécaniques comprend une canne (7) de soutien, le premier moyen (8) d'accrochage étant disposé au bout de cette canne (7) de soutien.

7. Ensemble selon la revendication 6, **caractérisé en ce que** la canne (7) de soutien est télescopique.

8. Ensemble selon la revendication 7, **caractérisé en ce que** la canne (7) de soutien comprend une partie (7a) fixe par rapport à la platine (2) de préparation d'organes mécaniques et une partie (7b) mobile rétractable dans la partie (7a) fixe, le premier moyen (8) d'accrochage étant disposé au bout de cette partie (7b) mobile.

9. Ensemble selon la revendication 7 ou la revendication 8, **caractérisé en ce que** la canne (7) de soutien comprend une poignée de manipulation de la partie (7b) mobile.

10. Procédé d'assemblage de différents types de véhicule comprenant une étape de coiffage de la caisse (1) d'un type de véhicule sur un ensemble de montage selon l'une des revendications 5 à 8, **caractérisé en ce qu'**il comprend une étape préalable de déploiement par un opérateur de la canne (7) de soutien pour la mise en place du premier moyen (8) d'accrochage à une position identique pour tout type de véhicule suivi d'une étape d'engagement par cet opérateur du second moyen (9) d'accrochage de la tubulure (6) de remplissage de carburant dans le premier moyen (8) d'accrochage.

## Patentansprüche

1. Fahrzeug-Montagekit inklusive:
- eine Platte (2) zur Vorbereitung mechanischer Teile (3, 4, 5), wobei diese Platte (2) zur Vorbereitung mechanischer Teile (3, 4, 5) für die Montage unterschiedlicher Fahrzeugtypen vorgesehen ist,
- einen für den zu montierenden Fahrzeugtyp spezifischen Kraftstoffkreislauf (4), der mit einer Kraftstoffeinfüllleitung (6) ausgestattet ist,
- der Brennstoffkreislauf (4) ist auf der Platte (2) zur Vorbereitung mechanischer Teile angeordnet,
**dadurch gekennzeichnet, dass** die Platte (2) zur Vorbereitung mechanischer Teile ein erstes Mittel (8) zum Anbringen des Einfüllrohrs (6) umfasst, dessen Position zum Halten des Rohrs (6) relativ zur Platte (2) für jeden Fahrzeugtyp identisch ist, und dass der Kraftstoffkreislauf (4) ein zweites Befestigungsmittel (9) umfasst, das mit dem ersten Befestigungsmittel (8) zum Halten des Einfüllrohrs (6) zusammenwirkt und dessen Position dieses zweiten Befestigungsmittels (9) spezifisch für den Kraftstoffkreislauf (4) des zu montierenden Fahrzeugtyps ist.

2. Anordnung nach Anspruch 1, **dadurch gekennzeichnet, dass** das erste Befestigungsmittel (8) einen männlichen Teil umfasst, der mit einem weiblichen Teil des zweiten Befestigungsmittels (9) zusammenwirkt, oder umgekehrt.

3. Anordnung nach Anspruch 2, **dadurch gekennzeichnet, dass** das zweite Befestigungsmittel (9) an das Füllrohr (6) angeformt ist.

4. Baugruppe nach Anspruch 1 oder 2, **dadurch gekennzeichnet, dass** das zweite Befestigungsmittel (9) an einem Kraftstofffilter, einem Kraftstoffdampfrückgewinnungsgerät (18), einer an einem Kraftstoffdampfrückgewinnungsgerät (18) befestigten Lasche (21) oder einer Pumpe (19) des Kraftstoffkreislaufs (4) angeordnet ist.

5. Anordnung nach Anspruch 1 oder Anspruch 2, **dadurch gekennzeichnet, dass** das zweite Befestigungsmittel (9) an einer an der Rohrleitung (6) befestigten Rohrhalterung (20) angeordnet ist , wobei diese Halterung zur Verbindung mit einer Karosserie des Fahrzeugs vorgesehen ist.

6. Anordnung nach einem der vorhergehenden Ansprüche, **dadurch gekennzeichnet, dass** die Platte (2) zur Vorbereitung mechanischer Teile eine Trägerstange (7) umfasst, wobei das erste Befestigungsmittel (8) am Ende dieser Trägerstange (7) angeordnet ist.

7. Anordnung nach Anspruch 6, **dadurch gekennzeichnet, dass** die Stützstange (7) teleskopartig ausgebildet ist.

8. Anordnung nach Anspruch 7, **dadurch gekennzeichnet, dass** die Trägerstange (7) einen relativ zur Platte (2) festen Teil (7a) zur Vorbereitung mechanischer Teile und einen in den festen Teil (7a) einziehbaren beweglichen Teil (7b) umfasst, wobei das erste Befestigungsmittel (8) am Ende dieses beweglichen Teils (7b) angeordnet ist.

9. Anordnung nach Anspruch 7 oder Anspruch 8, **dadurch gekennzeichnet, dass** die Stützstange (7) einen Griff zur Handhabung des beweglichen Teils (7b) aufweist.

10. Verfahren zum Zusammenbau unterschiedlicher Fahrzeugtypen, umfassend einen Schritt des Aufsetzens der Karosserie (1) eines Fahrzeugtyps auf eine Montageanordnung nach einem der Ansprüche 5 bis 8, **dadurch gekennzeichnet, dass** es einen vorherigen Schritt des Ausfahrens der Stützstange (7) durch einen Bediener zur Installation des ersten Befestigungsmittels (8) in einer für alle Fahrzeugtypen identischen Position umfasst, gefolgt von einem Schritt des Einrastens des zweiten Befestigungsmittels (9) des Kraftstoffeinfüllrohrs (6) in das erste Befestigungsmittel (8) durch diesen Bediener.

## Claims

1. Vehicle mounting kit including:
- a plate (2) for preparing mechanical parts (3, 4, 5), this plate (2) for preparing mechanical parts (3, 4, 5) being intended for the assembly of different types of vehicle,
- a fuel circuit (4) specific to the type of vehicle to be assembled and equipped with a fuel filling pipe (6),
- the fuel circuit (4) being arranged on the plate (2) for preparing mechanical parts, **characterized in that** the plate (2) for preparing mechanical parts comprises a first means (8) for attaching the filling pipe (6) whose position for holding the pipe (6) relative to the plate (2) is identical for any type of vehicle, and **in that** the fuel circuit (4) comprises a second attachment means (9) which cooperates with the first attachment means (8) to hold the filling pipe (6) and whose position of this second attachment means (9) is specific to the fuel circuit (4) of the type of vehicle to be assembled.

2. Assembly according to claim 1, **characterized in that** the first attachment means (8) comprises a male part cooperating with a female part of the second attachment means (9), or vice versa.

3. Assembly according to claim 2, **characterized in that** the second attachment means (9) is molded onto the filling pipe (6).

4. Assembly according to claim 1 or claim 2, **characterized in that** the second attachment means (9) is arranged on a fuel filter, a fuel vapor recuperator (18), a tab (21) fixed to a fuel vapor recuperator (18) or a pump (19) of the fuel circuit (4).

5. Assembly according to claim 1 or claim 2, **characterized in that** the second attachment means (9) is arranged on a tubing support (20) fixed to the tubing (6), this support being intended to be connected to a body of the vehicle.

6. Assembly according to one of the preceding claims, **characterized in that** the plate (2) for preparing mechanical parts comprises a support rod (7), the first attachment means (8) being arranged at the end of this support rod (7).

7. Assembly according to claim 6, **characterized in that** the support rod (7) is telescopic.

8. Assembly according to claim 7, **characterized in that** the support rod (7) comprises a part (7a) fixed relative to the plate (2) for preparing mechanical parts and a movable part (7b) retractable into the fixed part (7a), the first attachment means (8) being arranged at the end of this movable part (7b).

9. Assembly according to claim 7 or claim 8, **characterized in that** the support rod (7) comprises a handle for handling the movable part (7b).

10. Method for assembling different types of vehicle comprising a step of capping the body (1) of a type of vehicle on a mounting assembly according to one of claims 5 to 8, **characterized in that** it comprises a prior step of deployment by an operator of the support rod (7) for the installation of the first attachment means (8) in an identical position for all types of vehicle followed by a step of engagement by this operator of the second attachment means (9) of the fuel filler pipe (6) in the first attachment means (8).
